(19) Europäisches Patentamt
European Patent Office
Office européen des brevets

(11) Veröffentlichungsnummer: **0 417 462 A1**

# (12) EUROPÄISCHE PATENTANMELDUNG

(21) Anmeldenummer: **90115017.7**

(22) Anmeldetag: **04.08.90**

(51) Int. Cl.[5]: **C08J 5/18**, B01D 71/66, B01D 69/12, C08L 81/02, C08K 5/04, B01D 53/22

(30) Priorität: **17.08.89 DE 3927138**

(43) Veröffentlichungstag der Anmeldung: **20.03.91 Patentblatt 91/12**

(84) Benannte Vertragsstaaten: **DE FR GB IT**

(71) Anmelder: **BAYER AG**

**W-5090 Leverkusen 1 Bayerwerk(DE)**

(72) Erfinder: **Dorf, Ernst-Ulrich, Dr.**
**Bodelschwinghstrasse 16**
**W-4150 Krefeld 1(DE)**
Erfinder: **Rüsseler, Wolfgang, Dr.**
**Waldhofstrasse 121**
**W-4150 Krefeld 1(DE)**
Erfinder: **Reuter, Knud, Dr.**
**Scheiblerstrasse 99**
**W-4150 Krefeld(DE)**
Erfinder: **Westeppe, Uwe, Dr.**
**Vogelskamp 72**
**W-4020 Mettmann(DE)**
Erfinder: **Weymans, Günther, Dr.**
**Karl-Arnold-Strasse 4**
**W-5090 Leverkusen(DE)**

## (54) Folien aus Polyarylensulfid-Mischungen und ihre Verwendung zur Gastrennung.

(57) Die Erfindung betrifft Folien aus Mischungen von Polyarylensulfiden mit Polykondensaten auf Basis von Bisphenolen mit speziellen cycloaliphatischen Seitengruppen und ihre Verwendung zur Abtrennung von Gasen.

EP 0 417 462 A1

## FOLIEN AUS POLYARYLENSULFID-MISCHUNGEN UND IHRE VERWENDUNG ZUR GASTRENNUNG

Die Erfindung betrifft gasdurchlässige, vorzugsweise für Schwefeldioxid besonders gut durchlässige Folien aus Polyarylensulfid-Mischungen, enthaltend 95 bis 99,8 Teile Polyarylensulfid (PAS), 5 bis 0,2 Gewichtsteile Bisphenole mit speziellen cycloaliphatischen Seitengruppen und/oder Polymere auf Basis von wenigstens 20 Mol-% dieser Bisphenole sowie gegebenenfalls 0 bis 80 Gewichtsteile bekannte Additive wie Weichmacher, Füllstoffe oder Verstärkungsstoffe. Weiterhin betrifft die Erfindung die Verwendung der erfindungsgemäßen Folien zur Gastrennung.

Gegenstand der vorliegenden Erfindung sind Folien aus Mischungen, enthaltend

a) 95 bis 99,8 Gewichts-Teile Polyarylensulfid, vorzugsweise Polyphenylensulfid (PPS),

b) 5 bis 0,2 Gewichtsteile Polymere und/oder Oligomere auf Basis der Bisphenole der Formel (I) und/oder Bisphenole der Formel (I) selbst,

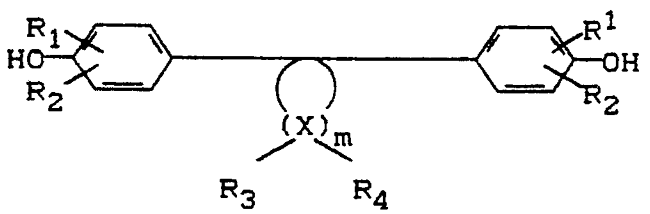

(I),

in welcher

$R_1$ und $R_2$ unabhängig voneinander Wasserstoff, Halogen (Cl, Br); $C_1$-$C_8$-Alkyl, $C_5$-$C_6$-Cycloalkyl, $C_6$-$C_{10}$-Aryl, $C_7$-$C_{12}$-Aralkyl, $C_7$-$C_{12}$-Alkylaryl bedeuten,

m für die Zahlen 4, 5, 6 oder 7 steht,

$R_3$ und $R_4$ für jedes X individuell wählbar, unabhängig voneinander Wasserstoff oder $C_1$-$C_6$-Alkyl und

X Kohlenstoff bedeuten,

mit der Maßgabe, daß an mindestens einem Atom X $R_3$ und $R_4$ gleichzeitig Alkyl ist

sowie gegebenenfalls

(c) 0 bis 80 Gewichts-Teile weitere Additive

Weiterer Gegenstand der Erfindung ist die Verwendung dieser Folien zur Gastrennung, bevorzugt zur Abtrennung nitroser und/oder schwefelhaltiger Gase, besonders bevorzugt zur Abtrennung von Schwefeldioxid und/oder Schwefeltrioxid.

In der DE-A 3 822 396 sind die Ausgangsprodukte der Formel (I), ihre Herstellung sowie Beispiele für erfindungsgemäß verwendbare Polymere, z.B. (Co-)Polycarbonate beschrieben. In der DE-A 3 833 386 sind Polyetherketone auf Basis der Bisphenole (I) beschrieben, in der DE-A 3 833 385 sind Polyethersulfone auf Basis der Bisphenole (I) beschrieben.

Ausgangsprodukte für die Polycarboante, Polyetherketone und Polyethersulfone sind Dihydroxydiphenylcycloalkane der Formel (I). Bevorzugt sind an 1-2 Atomen X, insbesondere nur an einem Atom X, $R_3$ und $R_4$ gleichzeitig Alkyl. Bevorzugter Alkyl-Rest ist Methyl. Die X-Atome in alpha-Stellung zu dem Diphenyl-substituierten C-Atom (C-1) sind bevorzugt nicht dialkylsubstiutiert. Eine Alkyldisubstitution in beta-Stellung zu C-1 ist bevorzugt. Bevorzugt sind Dihydroxydiphenylcycloalkane mit 5 und 6 Ring-C-Atomen im cycloaliphatischen Rest (m = 4 oder m = 5 in Formel (I)), beispielsweise die Diphenole der Formeln

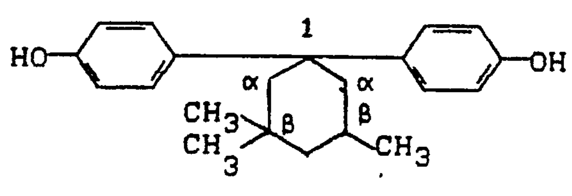

(II),

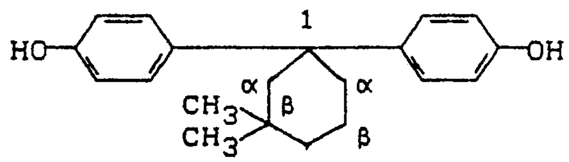

(III),

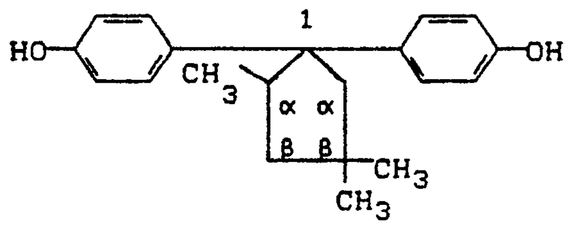

(IV)

1,1-Bis-(4-hydroxyphenyl)-3,3,5-trimethylcyclohexan (Formel II) ist besonders bevorzugt.

Die Diphenole der Formel (I) können für sich - ohne als Polymer eingesetzt werden - in dem angegebenen Gewichtsbereich eingesetzt werden. Es können für diesen Fall noch bis zu weiteren 5 Gewichts-Teilen anderen Diphenole mit zugegeben werden.

Die Diphenole der Formel (I) können auch zur Herstellung von Polymeren verwendet werden, die ihrerseits als Komponenten (b) - gegebenenfalls mit einem Gemisch aus Diphenolen (I) - eingesetzt werden können.

Polymere aus solchen Diphenolen sind Polycarbonate, Polyetherketone und Polyethersulfone.

Es können auch Gemische der Diphenole (I) mit anderen bekannten Diphenolen zur Herstellung der erfindungsgemäß verwendbaren Polymere (b) eingesetzt werden. Auch diesen Copolymeren (statistisch oder Block-) können - bis zu den angegebenen Gewichtsteilen - Diphenole der Formel (I) selbst zugemischt werden. Weiterhin können auch beliebige Mischungen dieser verschiedenen Polymere (z.B. Polycarbonat/Polyethersulfon-Mischungen) als Komponenten (b) verwendet werden. Die Komponente (b) enthält Polymere und/oder Diphenole der Formel (I) bzw. auf Basis der Formel (I). Copolymere sind dann verwendbar, wenn sie aus wenigstens 20 Mol-% Diphenolen der Formel (I) bestehen. Die Molekulargewichte der erfindungsgemäß verwendbaren Komponenten (b) können vom Molekulargewicht des reinen Diphenols bis hin zu hochmolekularen Polymeren, also bis in zu Molekulargewichten oberhalb 300.000 g/mol reichen. Auch Oligomere und Mischungen der Oligomeren mit hochmolekularen Polymeren sind verwendbar. Zur Vermeidung von unerwünschten Ausdampfungen sind Polymere mit einem Molekulargewicht von 10.000 bis 250.000 g/mol (Gewichtsmittel $M_w$, gemessen beispielsweise mit der Gelpermeationschromatographie) bevorzugt. Insbesondere sind Molekulargewichte zwischen 15.000 und 230.000 g/mol bevorzugt. Die chemische Uneinheitlichkeit $u_n = M_w/M_n - 1$ beträgt bis zu 20.

Erfindungsgemäß können beliebige Mischungen der Polymere Polyetherketone, Polyethersulfone, Polycarbonat und Diphenole (I) - zusammen 5 bis 0,2 Gewichtsteile - als Komponente (b) verwendet werden.

Dies können folglich Einzelkomponenten, binäre Mischungen, ternäre Mischungen sowie Mischungen aller vier Komponenten untereinander sein. Bevorzugt sind die Einzelkomponenten selbst, von denen wiederum die Polymere, insbesonder die (Co-)Polycarbonate, bevorzugt sind.

Andere Diphenole für die Komponente (b) sind Diphenole der Formel (V)

HO-Z-OH (V),

in welcher

Z ein aromatischer Rest mit 6 bis 50 C-Atomen ist, der einen oder mehrere aromatische Reste enthalten kann, substiutiert sein kann und aliphatische Reste oder andere cycloaliphatische Reste als die der Formel (I) oder Heteroatome als Brückenglieder enthalten kann.

Geeignete Diphenole sind z.B.

Hydrochinon,
Resorcin,
Dihydroxydiphenyle,
Bis-(hydroxyphenyl)-alkane,
Bis-(hydroxyphenyl)-cycloalkane,
Bis-(hydroxyphenyl)-sulfide,
Bis-(hydroxyphenyl)-ether,
Bis-(hydroxyphenyl)-ketone,
Bis-(hydroxyphenyl)-sulfone,

Bis-(hydroxyphenyl)-sulfoxide,
alpha,alpha'-Bis(hydroxyphenyl)-diisopropylbenzole,
sowie deren kernalkylierte und kernhalogenierte Verbindungen.

Diese und weitere geeignete andere Diphenole sind z.B. in den US-A 3 028 365, 2 999 835, 3 148 172, 3 275 601, 2 991 273, 3 2171 367, 3 062 781, 2 970 131 und 2 999 846, in den DE-A 1 570 703, 2 063 050, 2 063 052, 2 211 956, der Fr-A 1 561 518 und in der Monographie "H. Schnell, Chemistry and Physics of Polycarbonates, Interscience Publishers, New-York 1964", beschrieben.

Bevorzugte Diphenole sind
Hydrochinon
4,4'-Dihydroxydiphenylether
4,4'-Dihydroxybenzophenon
4,4'-Dihydroxydiphenyl
2,2-Bis-(4-hydroxyhenyl)-propan
2,4-Bis-(4-hydroxyphenyl)-2-methylbutan
1,1-Bis-(4-hydroxyphenyl)-cyclohexan.

Ganz besondrs bevorzugt ist 2,2-Bis-(4-hydroxyphenyl)-propan (Bisphenol-A).

Die Herstellung der Diphenole (I) sowie der (Co-)polycarbonate ist im Detail der DE-A 3 832 396 zu entnehmen. Die Herstellung der beiden anderen Polykondensaten entnimmt man der DE-A 3 833 386 bzw. DE-A 3 833 385.

Im folgenden sind die Herstellverfahren für die Diphenole (I) sowie die Polymeren (b) nochmals beschrieben.

Geeignete Polymere (b) sind beispielsweise Polycarbonate, Polyetherketone, Polyethersulfone.

Die Dihydroxydiphenylcycloalkane der Formel (I) können in an sich bekannter Weise durch Kondensation von Phenolen der Formel (VI)

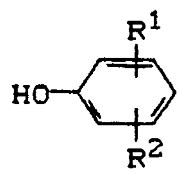

(VI),

und Ketonen der Formel (VII)

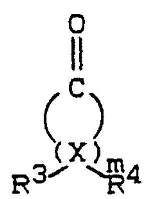

(VII)

hergestellt werden, wobei in den Formeln (VI) und (VII) X, $R^1$, $R^2$, $R^3$, $R^4$ und m die bei Formel (I) angegebene Bedeutung haben.

Die Phenole der Formel (VI) sind entweder literaturbekannt oder nach literaturbekannten Verfahren erhältlich (siehe beispielsweise für Kresole und Xylenole, Ullmanns Encyklopädie der technischen Chemie 4. neubearbeitete und erweiterte Auflage Band 15, Seiten 61 - 77, Verlag Chemie-Weinheim-New York 1978; für Chlorphenole, Ullmanns Encyklopädie der technischen Chemie, 4. Auflage, Verlag Chemie, 1975, Band 9, Seiten 573-582; und für Alkylphenole, Ullmanns Encyklopädie der technischen Chemie, 4. Auflage, Verlag Chemie 1979, Band 18, Seiten 191-214).

Beispiele für geeignete Phenole der Formel (VI) sind: Phenol, o-Kresol, m-Kresol, 2,6-Dimethylphenol, 2-Chlorphenol, 3-Chlorphenol, 2,6-Dichlorphenol, 2-Cyclohexylphenol, Phenylphenole und o- oder p-Benzylphenole.

Die Ketone der Formel (VI) sind literaturbekannt (siehe beispielsweise) Beilsteins Handbuch der Organischen Chemie, 7. Band, 4. Auflage, Springer-Verlag, Berlin, 1925 und die entsprechenden Ergänzungsbände 1 bis 4, und J. Am. Chem. Soc. Vol 79 (1957), Seiten 1488, 1490 und 1491, US-PS 2 692 289, Allen et al., J. Chem. Soc., (1954), 2186, 2191 und J. Org. Chem. Vol. 38, No. 26, (1973), Seiten 4431 ff, J. Am. Chem. Soc. 87 , (1965), Seite 1353 ff, insbesondere Seite 1355. Ein allgemeines Verfahren zur Herstellung von Ketonen der Formel (VI) ist beispielsweise in "Organikum, 15. Auflage, 1977, VEB-Deutscher Verlag der Wissenschaften, Berlin, beispielsweise Seite 698. beschrieben.

Beispiele für bekannte Ketone der Formel (VII) sind:

3,3-Dimethylcyclopentanon, 2,2-Dimethylcyclohexanon, 3,3-Dimethylcyclohexanon, 4,4-Dimethylcyclohexanon, 3-Ethyl-3-Methylcyclopentanon, 2,3,3-Trimethylcyclopentanon, 2,4,4-Trimethylcyclopentanon, 3,3,4-Trimethylcyclopentanon, 3,3-Dimethylcyclaheptanon, 4,4-Dimethylcycloheptanon, 3-Ethyl-3-methylcyclohexanon, 4-Ethyl-4-methylcyclohexanon, 2,3,3-Trimethylcyclohexanon, 2,4,4-Trimethylcyclohexanon, 3,3,4-Trimethylcyclohexanon, 2,5,5-Trimethylcyclohexanon, 3,3,5-Trimethylcyclohexanon, 3,4,4-Trimethylcyclohexanon, 2,3,3,4-Tetramethylcyclopentanon, 2,3,4,4-Tetramethylcyclopentanon, 3,3,4,4-Tetramethylcyclopentanon, 2,2,5-Trimethylcycloheptanon, 2,2,6-Trimethylcycloheptanon, 2,6,6-Trimethylcycloheptanon, 3,3,5-Trimethylcycloheptanon, 3,5,5-Trimethylcycloheptanon, 5-Ethyl-2,5-dimethylcycloheptanon, 2,3,3,5-Tetramethylcycloheptanon, 2,3,5,5-Tetramethylcycloheptanon, 3,3,5,5-Tetramethylcycloheptanon, 4-Ethyl-2,3,4-trimethylcyclopentanon, 2-Isopropyl-4,4-dimethylcyclopentanon, 4-Isopropyl-2,4-dimethylcyclopentanon, 2-Ethyl-3,5,5-trimethylcyclohexanon, 3-Ethyl-3,5,5-trimethylcyclohexanon, 3-Ethyl-4-isopropyl-3-methyl-cyclopentanon, 4-sec. Butyl-3,3-dimethylcyclopentanon, 2-Isopropyl-3,3,4-trimethylcyclopentanon, 3-Ethyl-4-isopropyl-3-methyl-cyclohexanon, 4-Ethyl-3-isopropyl-4-methyl-cyclohexanon, 3-sec.Butyl-4,4-dimethylcyclohexanon, 3-Isopropyl-3,5,5-trimethylcyclohexanon, 4-Isopropyl-3,5,5-trimethylcyclohexanon, 3,3,5-Trimethyl-5-propylcyclohexanon, 3,5,5-Trimethyl-5-propylcyclohexanon, 2-Butyl-3,3,4-trimethylcyclopentanon, 2-Butyl-3,3,4-trimethylcyclohexanon, 4-Butyl-3,3,5-trimethylcyclohexanon, 3-Isohexyl-3-methylcyclohexanon, 5-Ethyl-2,4-diisopropyl-5-methylcyclohexanon, 2,2-Dimethylcyclooctanon, und 3,3,8-Trimethylcyclooctanon.

Beispiele für bevorzugte Ketone sind

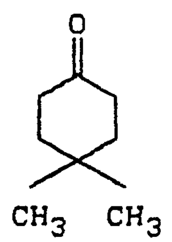

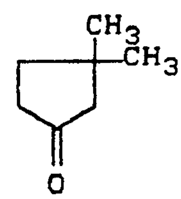

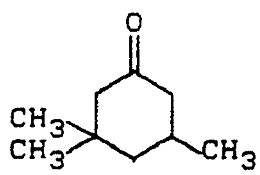

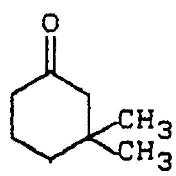

und

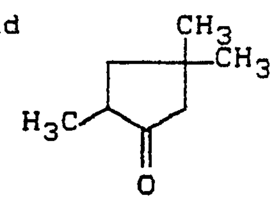

Zur Bisphenolherstellung werden im allgemeinen 2 bis 10 Mol, vorzugsweise 2,5 bis 6 Mol Phenol (VI) pro Mol Keton (VII), verwendet. Bevorzugte Reaktionszeiten betragen 1 bis 100 Stunden. Im allgemeinen arbeitet man bei Temperaturen von -30° C bis 300° C, vorzugsweise von -15° C bis 150° C und bei Drücken von 1 bis 20 bar, vorzugsweise von 1 bis 10 bar.

Die Kondensation wird im allgemeinen in Gegenwart saurer Katalysatoren durchgeführt. Beispiele sind Chlorwasserstoff, Bromwasserstoff, Fluorwasserstoff, Bortrifluorid, Aluminiumtrichlorid, Zinkdichlorid, Titantetrachlorid, Zinntetrachlorid, Phosphorhalogenide, Phosphorpentoxid, Phosphorsäure, konzentrierte Salzsäure oder Schwefelsäure sowie Mischungen aus Essigsäure und Acetanhydrid. Die Verwendung saurer Ionenaustauscher ist ebenfalls möglich.

Weiterhin kann die Umsetzung durch Zugabe von Co-Katalysatoren wie $C_1$-$C_{18}$-Alkyl-Mercaptanen, Schwefelwasserstoff, Thiophenolen, Thiosäuren und Dialkylsulfiden beschleunigt werden.

Die Kondensation kann ohne Lösungsmittel oder in Gegenwart eines inerten Lösungsmittels (z.B. aliphatischer und aromatischer Kohlenwasserstoff, Chlorkohlenwasserstoff) durchgeführt werden.

In den Fällen, in denen der Katalysator gleichzeitig als wasserentziehendes Mittel fungiert, ist es nicht erforderlich, zusätzlich wasserentziehende Mittel einzusetzen, letzteres ist jedoch zur Erzielung guter Umsätze in jedem Fall dann vorteilhaft, wenn der eingesetzte Katalysator das Reaktionswasser nicht bindet.

Geeignete wasserentziehende Mittel sind beispielsweise Acetanhydrid, Zeolithe, Polyphosphorsäure

und Phosphorpentoxid.

Man kann Phenol (VI) und Keton (VII) im Molverhältnis (VI) : (VII) zwischen 2:1 und 10:1, vorzugsweise zwischen 2,5 : 1 und 6 : 1 bei Temperaturen zwischen -30 °C und 300 °C, vorzugsweise zwischen -15 °C und 150 °C und bei Drücken von 1 bis 20 bar, vorzugsweise von 1 bis 10 bar in Anwesenheit saurer Katalysatoren und gegebenenfalls in Anwesenheit von Co-Katalysatoen und/oder Lösungsmitteln und/oder wasserentziehenden Mitteln umsetzen.

Bevorzugt sind in Formel (I) an 1 - 2 Atomen X, insbesondere nur an einem Atom X, $R^3$ und $R^4$ gleichzeitig Alkyl. Bevorzugter Alkylrest ist Methyl; ebenfalls verwendbar sind Ethyl oder $C_3$-$C_6$-Alkylreste, die geradkettig oder verzweigt sein können. Die X-Atome in α-Stellung zu dem di-phenylsubstituierten C-Atom (C-1) sind bevorzugt nicht dialkylsubstituiert, dagegen ist die Disubstitution mit Alkyl in β-Stellung in C-1 bevorzugt.

In manchen Fallen verläuft die Reaktion nicht ganz einheitlich, d.h. es können mehrere, unterschiedliche Pro dukte entstehen, so daß die gewünschte Verbindung zunächst aus einem Gemisch isoliert werden muß. Für Einzelheiten der Kondensation sei auf Schnell, Chemistry und Physics of Polycarbonates, Interscience Publishers, New York 1964 verwiesen. Manchmal kann die Reaktion durch Wahl entsprechender Katalysatoren und Reaktionsbedingungen so gesteuert werden, daß die gewünschte Verbindung ausfällt oder auskristallisiert, was deren Isolierung erleichtert.

Die Polycarbonate (b) können gemäß der DE-A 3 832 396 aus Diphenolen der Formel (I) hergestellt werden.

Es können sowohl ein Diphenol der Formel (I) unter Bildung von Homopolycarbonaten als auch mehrere Diphenole der Formel (I) unter Bildung von Copolycarbonaten verwendet werden.

Außerdem können die Diphenole der Formel (I) auch im Gemisch mit anderen Diphenolen, beispielsweise mit denen der Formel HO-Z-OH (VIII), zur Herstellung von hochmolekularen, thermoplastischen, aromatischen Polycarbonaten verwendet werden.

Geeignete andere Diphenole der Formel HO-Z-OH (VIII) sind solche, in denen Z ein aromatischer Rest mit 6 bis 30 C-Atomen ist, der einen oder mehrere aromatische Kerne enthalten kann, substituiert sein kann und aliphatische Reste oder andere cycloaliphatische Reste als die der Formel (I) oder Heteroatome als Brückenglieder enthalten kann.

Beispiele für Diphenole der Formel (VIII) sind

Hydrochinon,
Resorcin,
Dihydroxydiphenyle,
Bis-(hydroxyphenyl)-alkane,
Bis-(hydroxyphenyl)-cycloalkane,
Bis-(hydroxyphenyl)-sulfide,
Bis-(hydroxyphenyl)-ether,
Bis-(hydroxyphenyl)-ketone,
Bis-(hydroxyphenyl)-sulfone,
Bis-(hydroxyphenyl)-sulfoxide,
α,α'-Bis(hydroxyphenyl)-diisopropylbenzole
sowie deren kernalkylierte und kernhalogenierte Verbindungen.

Diese und weitere geeignete andere Diphenole sind z.B. in den US-A 3 028 365, 2 999 835, 3 148 172, 3 275 601, 2 991 273, 3 271 367, 3 062 781, 2 970 131 und 2 999 846, in den DE-A 1 570 703, 2 063 050, 2 063 052, 2 211 0956, der Fr-A 1 561 518 und in der Monographie "H. Schnell, Chemistry and Physics of Polycarbonates, Interscience Publishers, New York 1964", beschrieben.

Bevorzugte andere Diphenole sind beispielsweise:

4,4'-Dihydroxydiphenyl,
2,2-Bis-(4-hydroxyphenyl)-propan,
2,4-Bis-(4-hydroxyphenyl)-2-methylbutan,
1,1-Bis-(4-hydroxyphenyl)-cyclohexan,
α,α'-Bis-(4-hydroxyphenyl)-p-diisopropylbenzol,
2,2-Bis-(3-methyl-4-hydroxyphenyl)-propan,
2,2-Bis-(3-chlor-4-hydroxyphenyl)-propan,
Bis-(3,5-dimethyl-4-hydroxyphenyl)-methan,
2,2-Bis-(3,5-dimethyl-4-hydroxyphenyl)-propan,
Bis-(3,5-dimethyl-4-hydroxyphenyl)-sulfon,
2,4-Bis-(3,5-dimethyl-4-hydroxyphenyl)-2-methylbutan,
1,1-Bis-(3,5-dimethyl-4-hydroxyphenyl)-cyclohexan,

α,α′-Bis-(3,5-dimethyl-4-hydroxyphenyl)-p-diisopropylbenzol,
2,2-Bis-(3,5-dichlor-4-hydroxyphenyl)-propan und
2,2-Bis-(3,5-dibrom-4-hydroxyphenyl)-propan.

Besonders bevorzugte Diphenole der Formel (VII) sind beispielsweise:
2,2-Bis-(4-hydroxyphenyl)-propan,
2,2-Bis-(3,5-dimethyl-4-hydroxyphenyl)-propan,
2,2-Bis-(3,5-dichlor-4-hydroxyphenyl)-propan,
2,2-Bis-(3,5-dibrom-4-hydroxyphenyl)-propan und
1,1-Bis-(4-hydroxyphenyl)-cyclohexan.

Insbesondere ist 2,2-Bis-(4-hydroxyphenyl)-propan bevorzugt.

Die anderen Diphenole können sowohl einzeln als auch im Gemisch eingesetzt werden.

Das molare Verhältnis von Diphenolen der Formel (I) zu den gegebenenfalls mitzuverwendenden anderen Diphenolen, beispielsweise denen der Formel (VIII), soll zwischen 100 Mol-% (I) zu 0 Mol-% anderem Diphenol und 2 Mol-% (I) zu 98 Mol-% anderem Diphenol, vorzugsweise zwischen 100 Mol% (I) zu 0 Mol% anderem Diphenol und 5 Mol% (I) zu 95 Mol% anderem Diphenol und insbesondere zwischen 100 Mol%(I) zu 0 Mol% anderem Diphenol und 10 Mol% (I) zu 90 Mol% anderem Diphenol und 10 Mol% (I) zu 90 Mol% anderem Diphenol und ganz besonders zwischen 100 Mol% (I) zu 0 Mol% anderem Diphenol und 20 Mol% (I) zu 80 Mol% anderem Diphenol liegen.

Die hochmolekularen Polycarbonate aus den Diphenolen der Formel (I), gegebenenfalls in Kombination mit anderen Diphenolen können nach den bekannten Polycarbonatherstellungsverfahren hergestellt werden. Dabei können die verschiedenen Diphenole sowohl statistisch als auch blockweise miteinander verknüpft sein.

Die Polycarbonate können in an sich bekannter Weise verzweigt sein. Wenn Verzweigung gewünscht wird, kann sie in bekannter Weise durch Einkondensieren geringer Mengen, vorzugsweise Mengen zwischen 0,05 und 2,0 Mol% (bezogen auf eingesetzte Diphenole), an drei-oder mehr als dreifunktionellen Verbindungen, insbesondere solchen mit drei oder mehr als drei phenolischen Hydroxylgruppen erreicht werden. Einige Verzweiger mit drei oder mehr als drei phenolischen Hydroxylgruppen sind
Phloroglucin,
4,6-Dimethyl-2,4,6-tri-(4-hydroxyphenyl)-hepten-2,
4,6-Dimethyl-2,4,6-tri-(4-hydroxyphenyl)-heptan,
1,3,5-Tri-(4-hydroxyphenyl)-benzol,
1,1,1-Tri-(4-hydroxyphenyl)-ethan,
Tri-(4-hydroxyphenyl)-phenylmethan,
2,2-Bis-(4,4-bis-(4-hydroxyphenyl)-cyclohexyl)-propan,
2,4-Bis-(4-hydroxyphenyl-isopropyl)-phenol,
2,6-Bis-(2-hydroxy-5′-methyl-benzyl)-4-methylphenol,
2-(4-Hydroxyphenyl)-2-(2,4-dihydroxyphenyl)-propan,
Hexa-(4-(4-hydroxyphenyl-isopropyl)-phenyl)-ortho-terephthalsäureester,
Tetra-(4-hydroxyphenyl)-methan,
Tetra-(4-(4-hydroxyphenyl-isopropyl)-phenoxy)-methan und
1,4-Bis-((4′-,4″-dihydroxytriphenyl)-methyl)-benzol.

Einige der sonstigen dreifunktionellen Verbindungen sind 2,4-Dihydroxybenzoesäure, Trimesinsäure, Cyanurchlorid und 3,3-Bis-(3-methyl-4-hydroxyphenyl)-2-oxo-2,3-dihydroindol.

Als Kettenabbrecher zur an sich bekannten Regelung des Molekulargewichts der Polycarbonate (a) dienen monofunktionelle Verbindungen in üblichen Konzentrationen. Geeignete Verbindungen sind z.B. Phenol, tert.-Butylphenole oder andere Alkyl-$C_1$-$C_7$-substituierte Phenole. Zur Regelung des Molekulargewichts sind insbesondere kleine Mengen Phenole der Formel (IX) geeignet

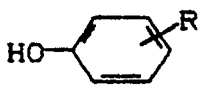
(IX),

worin R einen verzweigten $C_8$- und/oder $C_9$-Alkylrest darstellt. Bevorzugt ist im Alkylrest R der Anteil an $CH_3$-Protonen zwischen 47 und 89 % und der Anteil der CH- und $CH_2$-Protonen zwischen 53 und 11 %; ebenfalls bevorzugt ist R in o- und/oder p-Stellung zur OH-Gruppe, und besonders bevorzugt die obere Grenze des ortho-Anteils 20 %. Die Kettenabbrecher werden im allgemeinen in Mengen von 0,5 bis 10, bevorzugt 1,5 is 8 Mol-%, bezogen auf eingesetzte Diphenole, eingesetzt.

Die Polycarbonate (b) können vorzugsweise nach dem Phasengrenzflächenverfahren (vgl. H. Schnell, "Chemistry and Physics of Polycarbonates", Polymer Reviews, Vol. IX, Seite 33 ff., Interscience Publ., 1964) in an sich bekannter Weise hergestellt werden. Hierbei werden die Diphenole der Formel (I) in wäßrig alkalischer Phase gelöst. Zur Herstellung von Co-Polycarbonaten mit anderen Diphenolen werden Gemische von Diphenolen der Formel (I) und den anderen Diphenolen, beispielsweise denen der Formel (VIII), eingesetzt. Zur Regulierung des Molekulargewichtes können Kettenabbrecher z.B. der Formel (IX) zugegeben werden. Dann wird in Gegenwart einer inerten, vorzugsweise Polycarbonat lösenden, organischen Phase mit Phosgen nach der Methode der Phasengrenzflächenkondensation umgesetzt. Die Reaktionstemperatur liegt zwischen 0° C und 40° C.

Die gegebenenfalls mitverwendeten Verzweiger (bevorzugt 0,05 bis 2 Mol-%) können entweder mit den Diphenolen in der wäßrig alkalischen Phase vorgelegt werden oder in dem organischen Lösungsmittel gelöst vor der Phosgenierung zugegeben werden.

Neben den Diphenolen der Formel (I) und gegebenenfalls anderen Diphenolen (VIII) können auch deren Mono- und/oder Bis-chlorkohlensäureester mitverwendet werden, wobei diese in organischen Lösungsmitteln gelöst zugegeben werden. Die Menge an Kettenabbrechern sowie an Verzweigern richtet sich dann nach der molaren Menge von Diphenolat-Resten entsprechend Formel (I) und gegebenenfalls Formel (VIII); bei Mitverwendung von Chlorkohlensäureestern kann die Phosgenmenge in bekannter Weise entsprechend reduziert werden.

Geeignete organische Lösungsmittel für die Kettenabbrecher sowie gegebenenfalls für die Verzweiger und die Chlorkohlensäureester sind beispielsweise Methylenchlorid, Chlorbenzol, Aceton, Acetonitril sowie Mischungen dieser Lösungsmittel, insbesondere Mischungen aus Methylenchlorid und Chlorbenzol. Gegebenenfalls können die verwendeten Kettenabbrecher und Verzweiger im gleichen Solvens gelöst werden.

Als organische Phase für die Phasengrenzflächenpolykondensation dient beispielsweise Methylenchlorid, Chlorbenzol sowie Mischungen aus Methylenchlorid und Chlorbenzol.

Als wäßrige alkalische Phase dient beispielsweise wäßrige NaOH-Lösung.

Die Herstellung der Polycarbonate (b) nach dem Phasengrenzflächenverfahren kann in üblicher Weise durch Katalysatoren wie tertiäre Amine, insbesondere tertiäre aliphatische Amine wie Tributylamin oder Triethylamin katalysiert werden; die Katalysatoren können in Mengen von 0,05 bis 10 Mol-%, bezogen auf Mole an eingesetzten Diphenolen eingesetzt werden. Die Katalysatoren können vor Beginn der Phosgenierung oder während oder auch nach der Phosgenierung zugesetzt werden.

Die Polycarbonate (b) können auch nach dem bekannten Verfahren in homogener Phase, dem sogenannten "Pyridinverfahren" sowie nach dem bekannten Schmelzumesterungsverfahren unter Verwendung von beispielsweise Diphenylcarbonat anstelle von Phosgen hergestellt werden.

Die Polycarbonate (b) haben bevorzugt Molekulargewichte $\overline{M}$ w (Gewichtsmittel, ermittelt durch Gelchromatographie nach vorheriger Eichung) von mindestens 10 000, besonders bevorzugt von 10 000 bis 200 000 und insbesondere von 20 000 bis 80 000. Sie können linear oder verzweigt sein, sie sind Homopolycarbonate oder Copolycarbonate auf Basis der Diphenole der Formel (I).

Geeignete Polymere (b) sind auch aromatische Polyetherketone mit der wiederkehrenden Struktureinheit

-O-E-O-E'- (X),

worin

-E'- ein zweibindiger Rest eines aromatischen Ketons der Formel (XI)

$$-Ar-\underset{\underset{\displaystyle O}{\|}}{C}-Ar'- \qquad (XI),$$

mit

Ar und Ar' gleiche oder verschiedene difunktionelle aromatische Reste mit 6 bis 50 C-Atomen

und worin

-O-E-O- (XII),

ein zweibindiger Diphenolat-Rest ist, die dadurch gekennzeichnet sind, daß von 0,1 Mol% bis 100 Mol%, vorzugsweise von 3 Mol% bis 100 Mol% und insbesondere von 10 Mol% bis 100 Mol% der Diphenolat-Reste (XII) solche der Formel (I a)

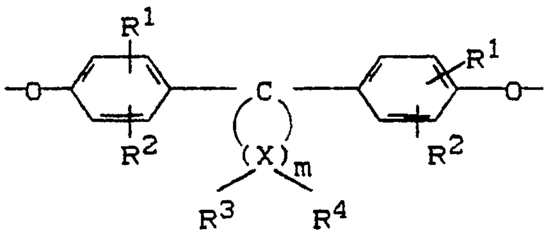

(I a),

sind, in denen X, $R^1$, $R^2$, $R^3$, $R^4$ und m wie in Formel (I) definiert sind.

Die aromatischen Polyetherketone haben bevorzugt mittlere Molekulargewichte $\overline{M}_w$ (Gewichtsmittel), ermittelt z. B. durch Gelpermeationschromatographie oder Lichtstreuung von 742 bis 500.000, vorzugsweise von 3.000 bis 200.000 und insbesondere von 5.000 bis 100.000.

Aromatische Polyetherketone sind bekannt (siehe beispielsweise GB-A 1 078 234, US-A 4 010 147 und EP-A 0 135 938). Sie können beispielsweise durch Umsetzung von Dialkalisalzen von Diphenolen mit Dihalogen-diarylketonen in einem polaren Lösungsmittel hergestellt werden, (siehe beispielsweise GB-A 1 078 234), wobei die Dialkalisalze der Diphenole auch in situ erzeugt werden können.

Die Polyetherketone können ebenfalls nach dieser Methode hergestellt werden, wobei als polares Lösungsmittel bevorzugt am Stickstoff $C_1$-$C_5$-alkylsubstituiertes Caprolactam, wie N-Methyl-caprolactam, N-Ethyl-caprolactam, N-n-Propyl-caprolactam, N-Isopropyl-caprolactam, vorzugsweise N-Methyl-caprolactam, und vorzugsweise am Stickstoff $C_1$-$C_5$-alkylsubstituierte Pyrrolidone, wie N-Methylpyrrolidon, N,N-Dimethylform amid, N,N-Dimethylacetamid, Dimethylsulfoxid, Dimethylsulfon, Sulfolan und Tetramethylharnstoff eingesetzt werden. Es können anteilig, z. B. 0,1 bis 200 Gew.-%, bezogen auf das Gewicht des polaren Lösungsmittels, andere weniger polare Lösungsmittel mitverwendet werden, z.B. aromatische Kohlenwasserstoff, wie Toluol, Xylol, Mesitylen, Chlorbenzol oder aliphatische Kohlenwasserstoffe wie Benzine, Cyclohexan.

Geeignete Diphenole der Formel (VIII) sind z.B.

Hydrochinon,
Resorcin,
Dihydroxydiphenyle,
Bis-(hydroxyphenyl)-alkane,
Bis-(hydroxyphenyl)-cycloalkane,
Bis-(hydroxyphenyl)-sulfide,
Bis-(hydroxyphenyl)-ether,
Bis-(hydroxyphenyl)-ketone,
Bis-(hydroxyphenyl)-sulfone,
Bis-(hydroxyphenyl)-sulfoxide,
$\alpha,\alpha'$-Bis(hydroxyphenyl)-diisopropylbenzole
sowie deren kernalkylierte und kernhalogenierte Verbindungen.

Diese und weitere geeignete andere Diphenole (VIII) sind z.B. in den US-A 3 028 365, 2 999 835, 3 148 172, 3 275 601, 2 991 273, 3 271 367, 3 062 781, 2 970 131 und 2 999 846, in den DE-A 1 570 703, 2 063 050, 2 063 052, 2 211 0956, der Fr-A 1 561 518 und in der Monographie "H. Schnell, Chemistry and Physics of Polycarbonates, Interscience Publishers, New York 1964", beschrieben.

Bevorzugte andere Diphenole (VIII) sind beispielsweise:

4,4'-Dihydroxydiphenyl,
2,2-Bis-(4-hydroxyphenyl)-propan,
2,4-Bis-(4-hydroxyphenyl)-2-methylbutan,
1,1-Bis-(4-hydroxyphenyl)-cyclohexan,
$\alpha,\alpha'$-Bis-(4-hydroxyphenyl)-p-diisopropylbenzol,
2,2-Bis-(3-methyl-4-hydroxyphenyl)-propan,
2,2-Bis-(3-chlor-4-hydroxyphenyl)-propan,
Bis-(3,5-dimethyl-4-hydroxyphenyl)-methan,
2,2-Bis-(3,5-dimethyl-4-hydroxyphenyl)-propan,
Bis-(3,5-dimethyl-4-hydroxyphenyl)-sulfon,
2,4-Bis-(3,5-dimethyl-4-hydroxyphenyl)-2-methylbutan,
1,1-Bis-(3,5-dimethyl-4-hydroxyphenyl)-cyclohexan,
$\alpha,\alpha'$-Bis-(3,5-dimethyl-4-hydroxyphenyl)-p-diisopropylbenzol,
2,2-Bis-(3,5-dichlor-4-hydroxyphenyl)-propan,

2,2-Bis-(3,5-dibrom-4-hydroxyphenyl)-propan und
4,4′-Dihydroxydiphenylsulfon.

Besonders bevorzugte andere Diphenole (VIII) sind beispielsweise:

2,2-Bis-(4-hydroxyphenyl)-propan,
2,2-Bis-(3,5-dimethyl-4-hydroxyphenyl)-propan,
2,2-Bis-(3,5-dichlor-4-hydroxyphenyl)-propan,
2,2-Bis-(3,5-dibrom-4-hydroxyphenyl)-propan,
1,1-Bis-(4-hydroxyphenyl)-cyclohexan und
4,4′-Dihydroxydiphenylsulfon.

Sie können einzeln oder im Gemisch eingesetzt werden.

Die Formel (XII) stellt die durch Entfernen von 2H-Atomen gebildeten Reste dieser Diphenole bzw. die Alkalisalze dieser Verbindung dar.

Geeignete Dihalogendiarylketone sind:

4,4'-Dichlorbenzophenon
4-Chlor-4'-Fluorbenzophenon
4,4'-Difluorbenzophenon
4,4'-Dichlorterephthalophenon

=

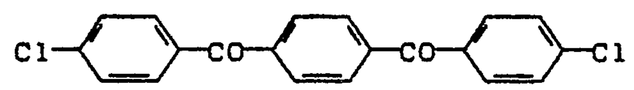

4,4'-Difluorterephthalophenon

= 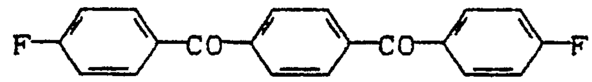

4,4'-Dichlorisophthalophenon

= 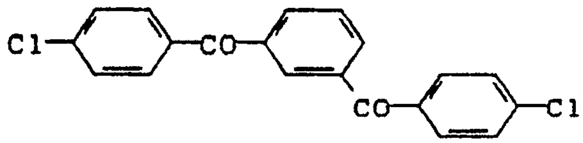

4,4'-Difluorisophthalophenon

= 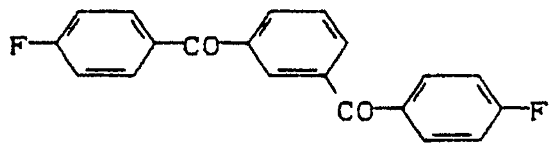

4,4'-Bis-(p-chlorbenzoyl)-diphenylether

= 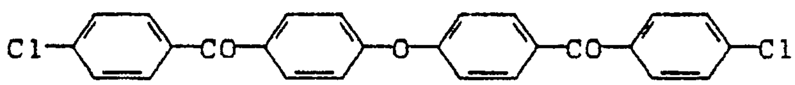

4,4'-Bis-(p-fluorbenzoyl)-diphenylether

= 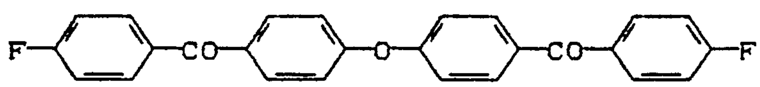

3,3'-Dinitro-4,4'-dichlorbenzophenon

3,3'-Dinitro-4,4'-difluorbenzophenon

4,4'-Bis-(p-chlorbenzoyl)-biphenyl

= 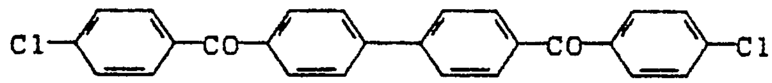

4,4'-Bis-(p-fluorbenzoyl)-biphenyl

= 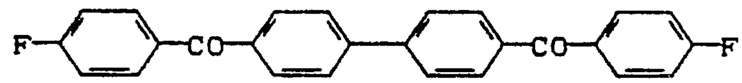

2,8-Bis-(p-chlorbenzoyl)-diphenylenoxid

= 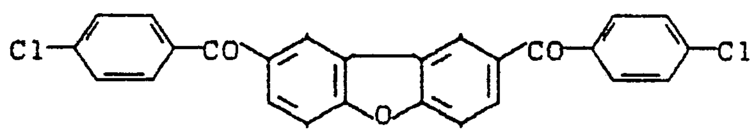

4,4'-Bis-(p-halogenbenzoyl)-diphenylmethan-derivate der Formel

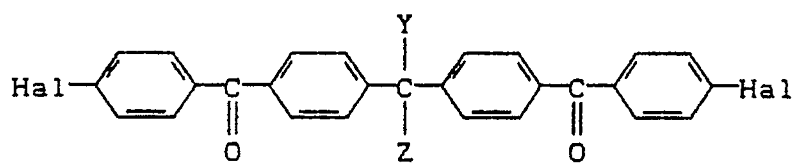

mit Y, Z als gleichen oder verschiedenen $C_1$-$C_9$-aliphatischen, $C_5$-$C_6$-cycloaliphatischen, $C_6$-$C_{10}$-aromatischen oder $C_7$-$C_{12}$ araliphatischen Resten oder Wasserstoff und Hal = Fluor oder Chlor, z. B.

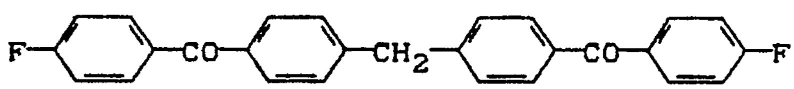

Der bevorzugte Rest Ar und Ar' in der Formel (XI) ist somit der p-Phenylenrest, der auch substituiert sein kann, z.B. mit Alkyl oder Nitrogruppen substituierte p-Phenylenreste oder Reste der Formel

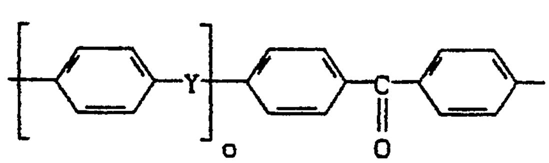

mit y = -O-, $CH_2$, -CO-, Einfachbindung und O = 0 oder 1 und Hal = Fluor oder Chlor.

Als Alkali in den Dialkaliphenolaten dient vorzugsweise Natrium oder Kalium.

Als Halogen in den Diahalogendiarylketonen (VIII) dient Fluor, Chlor und Brom, vorzugsweise Fluor und Chlor.

Bevorzugte Polyetherketone sind solche, die mindestens 10 Mol-% wiederkehrende Struktureinheiten der Formel

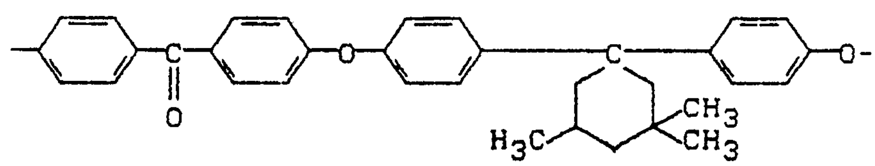

enthalten und ein Molekulargewicht von über 3000 g/mol aufweisen (Gewichtsmittel).

Die aromatischen Polyetherketone können bei Temperaturen von 130° C bis 350° C, bevorzugt 145° C bis 280° C, und bei Drucken von 0,8 bis 10 bar, bevorzugt 1 bis 3 bar, insbesondere bei atmosphärischem Umgebungsdruck hergestellt werden.

Das molare Mengenverhältnis der Alkalidiphenolate zu den Dihalogen-diaryl-ketonen (XI) liegt zwischen 0,5 und 2, bevorzugt zwischen 0,8 und 1,2, besonders bevorzugt zwischen 0,95 und 1,05, wobei für hohe Molekulargewichte ein Verhältnis von 1 oder sehr nahe bei 1 gewählt werden muß.

Die Menge an polaren Lösungsmitteln beträgt 0,5 bis 50, bevorzugt 2 bis 20 Gewichtsteile, bezogen auf das Gesamtgewicht der Polyetherketonrohstoffe ( = 1 Gew.-Teil).

Die Polyetherketone können z. B. wie folgt aus den erhaltenen Reaktionsgemischen gewonnen werden:

Man verdünnt das Reaktionsgemisch, insbesondere wenn sehr hochviskose Lösungen vorliegen, z. B. mit dem polaren Reaktions-Lösungsmittel oder einem anderen Lösungsmittel für das Polyetherketon, und filtriert. Nach Neutralisation des Filtrats mit einer geeigneten Säure, z. B. Essigsäure, wird das Polyetherketon durch Eingießen in ein geeignetes Fällungsmedium, z. B. Wasser oder Alkohole, wie z. B. Methanol oder Isopropanol oder Wasser-Alkohol-Gemische, z. B. $H_2O$/Methanol 1 : 1, ausgefällt, isoliert und anschließend getrocknet.

Geeignete Polymere (b) sind auch aromatische Polyethersulfone mit der wiederkehrenden Struktureinheit

-O-E-O-E′- (XIII),

worin -E- ein zweibindiger Rest eines aromatischen Sulfons der Formel (XIV)

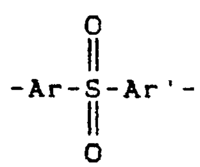 (XIV),

mit Ar und Ar′ = gleiche oder verschiedene difunktionelle aromatische Reste mit 6 bis 50-C-Atomen und worin

-O-E-O- (XV),

ein zweibindiger Diphenolat-Rest ist, die dadurch gekennzeichnet sind, daß von 0,1 Mol% bis 100 Mol%, vorzugsweise von 3 Mol% bis 100 Mol% und insbesondere von 10 Mol% bis 100 Mol% der Diphenolat-Reste (XV) solche der Formel (Ia)

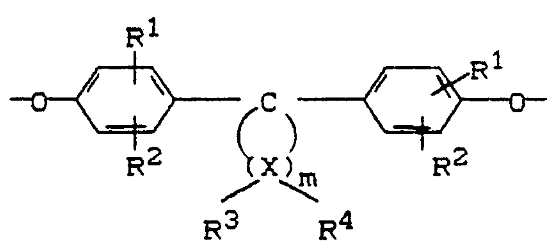 (I a),

sind, worin X, $R^1$, $R^2$, $R^3$, $R^4$ und m wie in Formel (I) definiert sind.

Die aromatischen Polyethersulfone (b) haben bevorzugt mittlere Molekulargewichte $\overline{M}$ w (Gewichtsmittel) von 758 bis 500 000, insbesonders von 3 000 bis 200 000 und speziell von 5 000 bis 100 000.

Aromatische Polyethersulfone sind bekannt (siehe beispielsweise GB-PS 1 078 234, US-PS 4 010 147 und EP-OS 0 135 938). Sie können beispielsweise durch Umsetzung von Dialkalisalzen von Diphenolen mit Dihalogen-diaryl-sulfonen in einem polaren Lösungsmittel hergestellt werden, (siehe beispielsweise GB-PS

1 078 234), wobei die Dialkalisalze der Diphenole auch in situ erzeugt werden können.

Die Polyethersulfone (b) können ebenfalls nach dieser Methode hergestellt werden, wobei als polares Lösungsmittel bevorzugt am Stickstoff $C_1$-$C_5$-alkylsubstituiertes Caprolactam, wie N-Methyl-caprolactam, N-Ethyl-caprolactam, N-n-Propyl-caprolactam, N-Isopropyl-caprolactam, vorzugsweise N-Methyl-caprolactam, und vorzugsweise am Stickstoff $C_1$-$C_5$-alkylsubstituierte Pyrrolidone, wie N-Methylpyrrolidon; N,N-Dimethylformamid, N,N-Dimethylacetamid, Dimethylsulfoxid, Diphenylsulfon, Sulfolan oder Tetramethylharnstoff, eingesetzt werden. Es können anteilig z.B. 0,1 bis 200 Gew-% bezogen auf das Gewicht des polaren Lösungsmittels andere weniger polare Lösungsmittel mitverwendet werden z.B. aromatische Kohlenwasserstoffe wie Toluol, Xylol, Mesitylen, Chlorbenzol, oder aliphatische Kohlenwasserstoffe wie Benzin, Cyclohexan.

Die Polyethersulfone mit der Struktureinheit (XIII) werden also durch Umsetzung von Dialkalidiphenolaten

Alkali-O-E-O-Alkali (XVI)

mit Dihalogen-diaryl-sulfonen (XIVa)

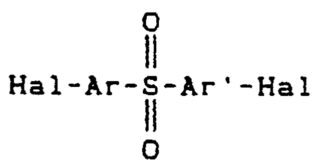

(XIVa),

worin Ar und Ar′ gleiche oder verschiedene difunktionelle aromatische Reste mit 6 bis 50 C-Atomen und Hal Halogen, bevorzugt Fluor, Chlor und Brom bedeuten, in polaren Lösungsmitteln umgesetzt, indem man von 0,1 Mol% bis 100 Mol% vorzugsweise von Mol% bis100 Mol% und insbesondere von 10 Mol% bis 100 Mol% der Dialkalidiphenolate (XVI) der Formel Ib

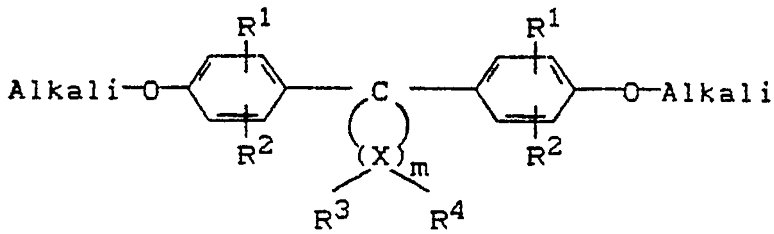

(I b)

entsprechen,

worin X, $R^1$, $R^2$,$R^3$, $R^4$ und m wie in Formel (I) definiert sind, verwendet und die Umsetzung in polaren Lösungsmitteln wie N-alkylierten Caprolactamen oder N-alkylierten Pyrrolidonen, vorzugsweise in N-alkylierten Pyrrolidonen durchführt.

Geeignete Diphenole sind z.B.

Hydrochinon,
Resorcin,
Dihydroxydiphenyle,
Bis-(hydroxyphenyl)-alkane,
Bis-(hydroxyphenyl)-cycloalkane,
Bis-(hydroxyphenyl)-sulfide,
Bis-(hydroxyphenyl)-ether,
Bis-(hydroxyphenyl)-ketone,
Bis-(hydroxyphenyl)-sulfone,
Bis-(hydroxyphenyl)-sulfoxide,
$\alpha,\alpha'$-Bis(hydroxyphenyl)-diisopropylbenzole
sowie deren kernalkylierte und kernhalogenierte Verbindungen.

Diese und weitere geeignete andere Diphenole sind z.B. in den US-A 3 028 365, 2 999 835, 3 148 172, 3 275 601, 2 991 273, 3 271 367, 3 062 781, 2 970 131 und 2 999 846, in den DE-A 1 570 703, 2 063 050, 2 063 052, 2 211 0956, der Fr-A 1 561 518 und in der Monographie "H. Schnell, Chemistry and Physics of Polycarbonates, Interscience Publishers, New York 1964", beschrieben.

Bevorzugte andere Diphenole sind beispielsweise:

4,4'-Dihydroxydiphenyl,
2,2-Bis-(4-hydroxyphenyl)-propan,
2,4-Bis-(4-hydroxyphenyl)-2-methylbutan,
1,1-Bis-(4-hydroxyphenyl)-cyclohexan,
α,α'-Bis-(4-hydroxyphenyl)-p-diisopropylbenzol,
2,2-Bis-(3-methyl-4-hydroxyphenyl)-propan,
2,2-Bis-(3-chlor-4-hydroxyphenyl)-propan,
Bis-(3,5-dimethyl-4-hydroxyphenyl)-methan,
2,2-Bis-(3,5-dimethyl-4-hydroxyphenyl)-propan,
Bis-(3,5-dimethyl-4-hydroxyphenyl)-sulfon,
2,4-Bis-(3,5-dimethyl-4-hydroxyphenyl)-2-methylbutan,
1,1-Bis-(3,5-dimethyl-4-hydroxyphenyl)-cyclohexan,
α,α'-Bis-(3,5-dimethyl-4-hydroxyphenyl)-p-diisopropylbenzol,
2,2-Bis-(3,5-dichlor-4-hydroxyphenyl)-propan,
2,2-Bis-(3,5-dibrom-4-hydroxyphenyl)-propan und
4,4'-Dihydroxydiphenylsulfon.

Besonders bevorzugte andere Diphenole sind beispielsweise:
2,2-Bis-(4-hydroxyphenyl)-propan,
2,2-Bis-(3,5-dimethyl-4-hydroxyphenyl)-propan,
2,2-Bis-(3,5-dichlor-4-hydroxyphenyl)-propan,
2,2-Bis-(3,5-dibrom-4-hydroxyphenyl)-propan und
1,1-Bis-(4-hydroxyphenyl)-cyclohexan und
4,4'-Dihydroxydiphenylsulfon.

Sie können einzeln oder im Gemisch eingesetzt werden.

Die Formel (XV) und (XVI) stellen in durch Entfernen von 2 H-Atomen gebildeten Reste dieser Diphenole beziehungsweise die Alkalisalze dieser Verbindungen dar.

Geeignete Dihalogendiarylsulfone (XIII) sind z.B.
4,4'-Dichlordiphenylsulfon,
4,4'-Difluordiphenylsulfon,
4-Chlor-4'-fluordiphenylsulfon,
3,3'-Dinitro-4,4'-dichlordiphenylsulfon,
3,3'-Dinitro-4,4'-difluordiphenylsulfon,
4,4'-Dibromdiphenylsulfon,

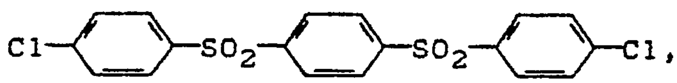

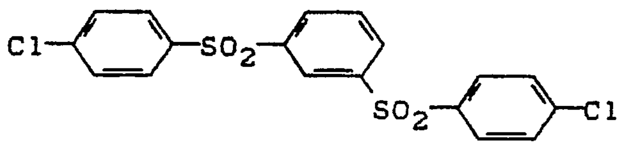

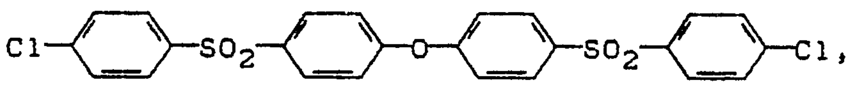

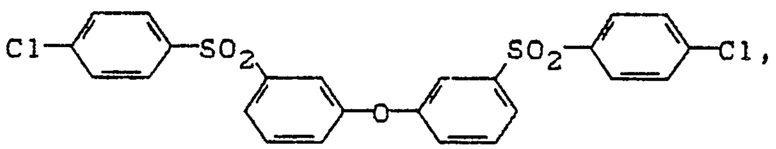

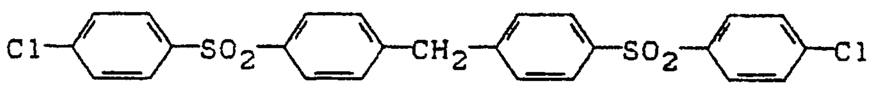

Bevorzugt sind demnach in Formel (XIII)

Ar und Ar' p-Phenylenreste oder mit Alkyl oder Nitrogruppen substituierte p-Phenylenreste oder Reste der Formel

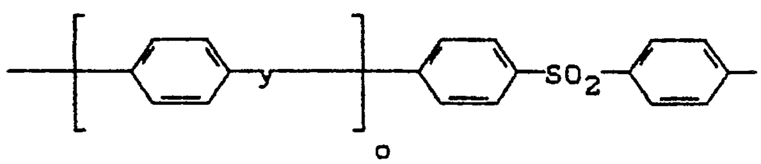

mit y = -O-, $-CH_2-$, $-SO_2-$, Einfachbindung und o = 0 oder 1
und Hal = Fluor, Chlor oder Brom.

Als Alkali in den Dialkaliphenolaten (Ib) und (XVI) dient vorzugsweise Natrium und Kalium.

Als Halogen in den Dihalogendiarylsulfonen dient vorzugsweise Chlor und Fluor, insbesondere Chlor.

Bevorzugte, erfindungsgemäße Polyethersulfone sind solche die mindestens 10 Mol-% der wiederkehrenden Einheit

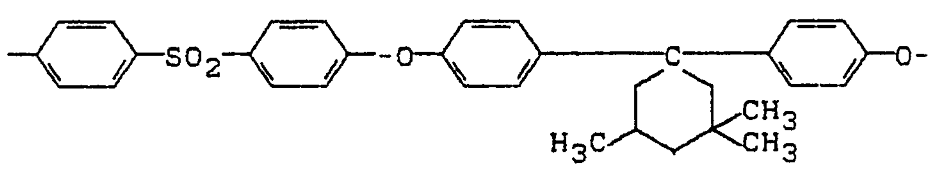

enthalten, und ein Molekulargewicht (Gewichtsmittel) von über 3000 g/mol aufweisen.

Die aromatischen Polyethersulfone (b) können bei Temperaturen von 130° C bis 320° C, bevorzugt 145° C bis 280° C und bei Drucken von 0,8 bis 10 bar, vorzugsweise 1 bis 3 bar insbesondere bei atmosphärischem Umgebungsdruck hergestellt werden.

Das molare Mengenverhältnis der Alkalidiphenolate (I b) und (XVI) zu den Dihalogen-diaryl-sulfonen

(XIII) liegt zwischen 0,5 und 2, bevorzugt 0,8 und 1,2, besonders bevorzugt 0,95 und 1,05, wobei für hohe Molekulargewichte ein Verhältnis von 1 oder nahe bei 1 gewählt werden muß.

Die Menge an polaren Lösungsmitteln beträgt 0,5 bis 50, bevorzugt 2 bis 20 Gewichtsteile bezogen auf das Gesamtgewicht der Polyethersulfonbildungskomponenten.

Die Polyethersulfone (b) können wie folgt aus den erhaltenen Reaktionsgemischen gewonnen werden.

Man verdünnt das Reaktionsgemisch, insbesondere wenn sehr hochviskose Lösungen vorliegen, z.B. mit den polaren Reaktions-Lösemittel oder einem anderen Lösungsmittel für das Polyethersulfon, und filtriert. Nach Neutralisation des Filtrats mit einer geeigneten Säure, z.B. Essigsäure, wird das Polyethersulfon durch Eingießen in ein geeignetes Fällungsmedium, z.B. Wasser, Alkohole (wie z.B. Methanol, Isopropanol) oder Wasser-Alkohol-Gemische, z.B. $H_2O$/Methanol 1:1, ausgefällt, isoliert und anschließend getrocknet.

Erfindungsgemäß geeignete Polyarylensulfide, vorzugsweise Polyphenylensulfid können linear oder verzweigte Polyarylensulfide der Formel (XVII)

$(-S-Ar-)_n$ (XVII),

in welcher

-Ar- für eine $C_6$-$C_{30}$-Arylengrupe steht, die gegebenenfalls weitere Gruppen wie Carbonyl, Sulfon etc. enthalten kann.

Beispiele für Reste Ar sind sind p-Phenylen, m-Phenylen, o-Phenylen-Gruppen, alkylsubstituierte Phenylene, p,p′-Biphenylen-, p,p′-Diphenylenether-, p,p′-Diphenylencarbonyl-oder höherwertige aromatische (Hetero)cyclen wie beispielsweise Naphthalin. Gegebenenfalls können auch Beimengen von Disulfid-, Dibenzothiophen-, Thiantren-, Sulfonstrukturen und Verzweigern enthalten sein. Die erfindungsgemäß geeigneten Polyarylensulfide der Formel (XVII) können weiterhin in bekannter Weise mit bekannten Endgruppen modifiziert sein.

Die Polyarylensulfide sind bekannt und handelsüblich (z.B. US-A 3 354 129, EP-A 171 021, z.B. Ryton®, Tedur®, Fortron®).

Bevorzugt haben die erfindungsgemäß geeigneten linearen oder verzweigten Polyarylensulfide mindestens zu 40 Gew.-%, bezogen auf das Gesamtgewicht der Komponente (a) Struktureinheiten der Formel (XVIII),

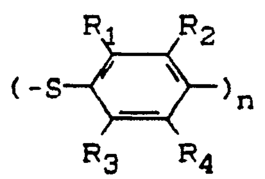 . (XVIII),

in welcher

$R_1$ bis $R_4$ unabhängig oder gleich sein können und $C_1$-$C_6$-Alkyl, Phenyl oder Wasserstoff sind.

Weiterhin können die Polyarylensulfide bevorzugt auch Biphenylen-, Diphenylketon und/oder Diphenylsulfon-Einheiten enthalten.

Gegebenenfalls enthalten die Mischungen auch Additive (c). Als Additive kommen erfindungsgemäß in Frage:

- anorganische oder organische Füllstoffe
- Fasern
- Nukleierungsmittel
- Schutz- und Farbstoffe etc.,

wie sie z.B. in Modern Plastics Encyclopedia 1988, Vol 66, No. 10A, S. 183 - 194 und S. 127 - 178, beschrieben sind.

Als Füllstofe sind insbesondere anorganische Füllstoffe geeignet, z.B. Keramikfüllstoffe wie Aluminiumnitrit, Silikate, Titandioxid, Talkum, Kreide, Glimmer, Ruß, Graphit, Glaskugeln u.s.w. Es können auch Fasern aus Glas, Kohlenstoff sowie Fasern aus Polymeren eingesetzt werden. Die Fasern sollten bei der üblichen Verarbeitungstemperatur der erfindungsgemäßen Mischungen nicht aufschmelzen und Zug-Elastizitätsmodulen (gemessen im Zugversuch bei Raumtemperatur und einer Zuggeschwindigkeit von weniger als 10 cm/min) von mehr als 10 GPa, bevorzugt mehr als 18 GPa haben. Solche Polymerfasern sind beispielsweise Fasern aus vollaromatischen flüssigkristallinen Polymeren.

Nukleierungsmittel sind beispielsweise Bariumsulfat oder Titandioxid.

Diese Additive können entweder vor der Herstellung der erfindungsgemäßen Mischungen den Komponenten (a) oder (b) oder zusammen mit der Komponente (b) der Komponente (a) oder nachträglich den

Mischungen aus (a) und (b) zugemischt werden. Ebenso können den Polycarbonaten der Komponenten (b) -vor oder während oder nach der Abmischung mit der Komponente (a) - die genannten Additive in den üblichen Mengen zugesetzt werden.

Die Mischungen enthalten - wie bereits beschrieben -
von 95 bis 99,8 Gewichts-Teile,
bevorzugt von 96 bis 99,5 Gewichts-Teile,
insbesondere von 96 bis 99 Gewichts-Teile Komponente (a),
von 5 bis 0,2 Gewichts-Teile,
bevorzugt von 4 bis 0,5 Gewichts-Teile,
insbesondere von 4 bis 1,0 Gewichts-Teile Komponente (b),
sowie gegebenenfalls
von 0 bis 80 Gewichts-Teile,
bevorzugt von 0 bis 75 Gewichts-Teile,
insbesondere von 0 bis 70 Gewichts-Teile Komponente (c).

Die Mischungen werden hergestellt, indem man die Ausgangskomponenten in an sich bekannter Weise zwischen Temperaturen von 250° C bis 450° C, bevorzugt von 260° C bis 430° C, insbesondere von 280° C bis 430° C, bei Schergefällen von 0,1 $s^{-1}$ bis 1000 $s^{-1}$, bevorzugt von 1 $s^{-1}$ bis 800 $s^{-1}$ durch inniges Vermischen, Extrudieren oder Keten vermengt und anschließend gegebenenfalls granuliert und im Spritzguß weiterverarbeitet werden zu Formteilen.

Ein Verfahren zur Herstellung der erfindungsgemäßen Mischungen aus den Komponenten (a), (b) und gegebenenfalls (c) kann dadurch erfolgen, daß man die Einzelkomponenten (a) und (b) zwischen Temperaturen von 250° C und 450° C bei Schergefällen von 0,1 $s^{-1}$ bis 1000 $s^{-1}$ durch Kneten, Extrudieren oder andere an sich bekannte Vermischapparaturen vermengt.

Die Erfindung betrifft weiterhin die Verwendung der Folien aus den beschriebenen Mischungen zur Abtrennung von Gasen, vorzugsweise schwefel- und nitrosehaltigen Gasen.

Aus der JP-A 2 196-140 sind elektrisch leitende transparente Folien bekannt, die unter anderem Polyphenylensulfid enthalten. Die Folien sollen ausgezeichnete Barriere-Eigenschaften haben. Neben der aufwendigen Herstellung haben sie den Nachteil, für die selektive Gastrennung z.B. schwefelhaltiger Substanzen nicht einsetzbar zu sein.

Aus der JP-A 1 242-841 sind Laminate aus Ethylen-Vinylacetat-Copolymer und anderen Thermoplasten bekannt, die gute Barriere-Eigenschaften haben sollen.

Aus der JP-A 1 000-432 sind Verbundfolien bekannt für die selektive Gastrennung. Die Membranen bestehen aus einem dünnen Polymerfilm, z.B. aus Polydimethylsiloxan, Polycarbonat, Polyvinylalkohol, Polyamid-6 oder Polysulfon, der auf eine mikroporöse Polyphenylensulfid-Folie mit Poren von 100 bis 20.000 Angström aufgetragen wird. Die Verbundfolien sollen für die Trennung bzw. Anreicherung von Gasen wie Wasserstoff, Sauerstoff, Schwefelwasserstoff, Methan usw. nützlich sein. Das aufwendige Herstellverfahren ist ein entscheidender Nachteil dieser Verbundfolien.

In der JP-A 2 149-307 werden Folien für die selektive Gastrennung beschrieben, die nach ihrer Herstellung nochmals in kochendem Wasser behandelt werden. Die Membranen bestehen aus hitzebeständigen Polymeren, z.B. Polyetherimiden und Polyphenylensulfiden. Über die Verwendung zur Abtrennung schwefelhaltiger Substanzen ist kein Hinweis zu entnehmen.

Zur Trennung von Kohlendioxid aus Erdgas werden in der US-A 4 673 717 Membranen aus substituierten Polyarylenen, u.a. Polyphenylensulfiden, beschrieben.

Wichtig für gute Permeationseigenschaften ist bekanntlich die generelle Beobachtung, daß der Transport niedermolekularer Substanzen wie Gase und Flüssigkeiten in solchen Folien oder Membranen von der Art des verwendeten Thermoplasten und der niedermolekularen Substanz abhängt. Bei einer Anwendung, bei der es auf selektive Gastrennung ankommt, ist z.B. für die Folie wichtig, bestimmte Gase sehr gut, andere nur sehr schlecht durch die Folie durchzulassen. Solche Folien sind bereits bekannt; jedoch haben sie meistens eine zu geringe Wärmeformbeständigkeit.

Zur Verbesserung der Wärmeformbeständigkeit kann Folien aus anderen Polymeren zu einem Verbund mit den hochselektiven Folien bringen. Dabei ist entscheidend für diese wärmefesten Zusatzfolien, daß sie die Selektivität nicht verschlechtern und z.B. möglichst viele Gase pro Zeit durch die wärmeformbeständige Komponente durchlassen. Die Verbundfolie kann nämlich nur dann den Vorteil von hoher Selektivität und hoher Wärmeformbeständigkeit günstig vereinen, wenn die wärmeformbeständige Folie keine Sperrschicht für die Gase bildet, die durch die hochselektive Folie getrennt werden sollen.

Bei der Verbrennung von fossilen Brennstoffen wie Erdöl, Schwarzkohle oder Braunkohle entstehen u.a. schwefelhaltige Gase wie Schwefeldioxid, Schwefelwasserstoff, $SO_3$, Stickoxide, z.B. $NO_2$. Die Entschwefelung und Entstickung dieser Abgase ist wesentlich. Die zur Trennung der Abgase verwendeten Medien

sollen gegen die zu trennenden Gase inert sein. Weiterhin müssen die Medien eine gute Durchlässigkeit der zu trennenden Gase haben, damit der Durchsatz pro verwendeter Membranfläche hoch ist und das Trennverfahren wirtschaftlich wird.

Bei der Herstellung z.B. von Schwefelsäure entstehen in der Flüssigkeit oder im Dampfraum eine Reihe von schwefelhaltigen Substanzen, die - zur Erhöhung des Reinheitsgrades der herzustellenden Schwefelsäure - abgetrennt werden müssen. Auch hier sind Polymerfolien hoher Selektivität für schwefelhaltige Substanzen gefordert, die eine genügend hohe Chemikalienresistenz haben.

Es wurde nun gefunden, daß sich Folien oder Verbundfolien aus den beschriebenen Mischungen mit anderen Polymeren zur Abtrennung schwefelhaltiger oder nitrosehaltiger Substanzen eignen.

Gegenstand der Erfindung ist daher die Verwendung von Folien, vorzugsweise einer Dicke von mehr als 1 µm, vorzugsweise von 2 µm bis 2.000 µm, insbesondere 5 bis 250 µm, aus den Mischungen zur Abtrennung von Gasen, vorzugsweise schwefelhaltigen oder stickoxidhaltiger Gasen.

Die Folien können gegebenfalls (z.B. monoaxial, biaxial) orientiert und/oder thermofixiert sein.

Ein weiterer Gegenstand der Erfindung ist die Verwendung von Verbundfolien aus den beschriebenen Mischungen, einer Dicke von 2 bis 2.000 µm, vorzugsweise 5 bis 250 µm, insbesondere 5 bis 100 µm, mit anderen Polymerfolien einer Dicke um 2 bis 1.500 µm, vorzugsweise 5 bis 200 µm, insbesondere 5 bis 80 µm, zur Abtrennung schwefelhaltiger oder stickoxidhaltiger Substanzen.

Andere Polymere im Sinne der erfindungsgemäß verwendbaren Verbundfolien sind generell Folien einer Dicke zwischen 2 und 2.000 µm aus

a) amorphen Thermoplasten mit einer Glastemperatur von mehr als 40° C, bevorzugt von 50° C bis 250° C, besonders bevorzugt von 60° C bis 220° C,

b) teilkristallinen Thermoplasten mit einer Schmelztemperatur von mehr als 60° C, bevorzugt von 80° C bis 400° C.

Als solche Polymere kommen z.B. in Frage die in der Literatur bekannten Polymere Polyhalo-olefine, Polyvinyle, Polyether, Polyacrylate, Polymethacrylate, Polyepoxide, Polyester, Polyamide, Polyarylensulfide, Polysulfone, Polyketone, Polyurethane, Polyimide, thermotrope LC-Polymere, lyotrope LC-Polymere.

Die Folien können nach bekannten Verfahren hergestellt werden, z.B. durch (Co)-Extrusion, durch Tiefziehen, durch Gießen von Lösungen usw.

Bevorzugt ist die Herstellung der Verbundfolien durch Coextrusion. Dabei werden bekanntlich die für die Schichten eingesetzten Kunststoffe aus je einem Extruder im thermoplastischen Zustand in eine Zwei- oder Mehrstoff-Extrusionsdüse eingespeist und in derselben zu einer Schicht vereinigt werden. Die aus dem Düsenschlitz austretende Verbundbahn wird in einem unmittelbar nachgeschalteten Glättwerk kalandriert.

Die Einzelschichten für die Folien können auch jede für sich in der gewünschten Dicke als selbständige Folien hergestellt und kontinuierliches Verpressen zwischen beheizten Walzen in der Wärme zu der Verbundfolie vereinigt werden. Ein unlösbarer Verbund der beiden oder mehrerer Folien kann z.B. erreicht werden, wenn die aufeinandergelegten Folien gemeinsam mit einer Geschwindigkeit von etwa 1 bis 100 m/min unter einem Liniendruck von 5 bis 800 N/cm durch einen Walzenspalt geführt werden. Die Walzentemperatur sollte so hoch sein, daß wenigstens die Folie aus anderen Polymeren als den PAS-Substanzen den thermoelastischen Zustandsbereich erreicht. Walzentemperaturen von 100 bis 320° C sind in der Regel geeignet.

Die Folienherstellung durch Extrusion erfolgt beispielsweise, indem man das bei Temperaturen zwischen 250° C und 400° C, bevorzugt zwischen 250° C und 380° C, bekannte Folienextrusionsverfahren anwendet, wobei die Extrusionstemperatur durch die Glastemperatur der eingesetzten Materialien variiert werden kann. Gegebenenfalls werden die Folien nach Abkühlung, bevorzugt in der Nähe ihrer Glastemperatur, nochmals uni- oder/und biaxial verstreckt.

Die Folienherstellung durch Tiefziehen erfolgt beispielsweise dadurch, daß man kurz oberhalb der Glastemperatur des PAS, vorzugsweise zwischen Raumtemperatur und 200° C, Granulatblöcke des Polymeren durch rakeln zu Folien tiefzieht.

Die Folienherstellung durch Gießen von Lösungen der Einsatzstoffe erfolgt beispielsweise, indem man konzentrierte Lösungen der Einsatzstoffe in einem geeigneten Lösungsmittel auf ebene Oberflächen ausgießt und bei einer Temperaturführung der ebenen Oberflächen zwischen Raumtemperatur und 150° C das Lösungsmittel anschließend verdampft. Man kann die konzentrierten Lösungen auch auf Flüssigkeiten aufbringen, welche eine höhere Dichte als die der konzentrierten Lösungen haben, nicht mit dem verwendeten Lösungsmittel verträglich sind und die verwendeten Materialien nicht lösen, und nach dem Spreiten die Folien durch Verdampfen des verwendeten Lösungsmittels und gegebenenfalls auch der Flüssigkeit mit höherer Dichte gewinnen.

Die Herstellung der Verbundfolien kann auch erfolgen, indem man zunächst in bekannter bzw. in der oben beschriebenen Weise in geeigneter Temperaturführung die Folien der Einzelkomponenten herstellt.

Anschließend bringt man die nicht abgekühlten Folien ohne größere Verstreckung auf eine gemeinsame Temperatur, die vorzugsweise zwischen Raumtemperatur und 390° C liegt. Die Folien werden dann über Walzen zusammengeführt und kurzzeitig verpreßt. Dabei kann ein Druck von 2 bis 500 bar angewendet werden. Das Verfahren kann auch mit mehr als einer anderen Folie als der aus den PAS durchgeführt werden, wobei beispielsweise zunächst jeweils die anderen Folien in der bisher bekannten Weise zusammengebracht werden und danach mit der Folie aus den PAS unter dem oben beschriebenen Druck verpreßt werden.

## Beispiele

Der Durchgang eines Gases durch eine dichte Polymermembran wird durch einen Lösungs-Diffusionsvorgang beschrieben. Die kennzeichnende Konstante für diesen Prozeß ist der Permeationskoeffizient P, der angibt, welches Gasvolumen V bei gegebener Druckdifferenz ΔP in einer bestimmten Zeit t durch eine Folie bekannter Fläche F und Dicke d hindurchtritt. Für den stationären Zustand läßt sich aus den Differentialgleichungen des Permationsvorgangs bekanntermaßen ableiten:

$$P = \frac{V \cdot d}{F \cdot t \cdot \Delta P}$$

Darüber hinaus ist die Permeation abhängig von der Temperatur und der Gasfeuchte.

Die Meßanordnung besteht aus einem thermostatisierten Zwei-Kammer-System. Die eine Kammer ist für die Aufnahme des Vorgabegases und die andere für die Aufnahme des Permeates ausgelegt. Die Kammern sind durch die zu messende Polymermembran getrennt. Der Druckanstieg in der Permeatkammer wird mit einem Druckaufnehmer, z.B. Baratron der Firma MKS, als Funktion der Zeit bis in den stationären Gasdurchgang registriert.
Der Permeationskoeffizient P wird in den Einheiten

$$[P] = \frac{cm^3 \cdot mm}{m^2 \cdot 24\ h \cdot 10^5\ Pa}$$

gemessen, wobei auf eine Membrandicke von 1 mm bezogen ist. Weitere Meßparameter sind:
Temperatur: 25° C bei einer rel. Gasfeuchte von 0 %

### Beispiel 1

Herstellung von 1,1-Bis-(4-hydroxyphenyl)-3,3,5-trimethylcyclohexan gemäß DE-A 3 832 396

In einem 1-Liter-Rundkolben mit Rührer, Tropftrichter, Thermometer, Rückflußkühler und Gasleitungsrohr werden 7,5 Mol (705 g) Phenol und 0,15 Mol (30,3 g) Dodecylthiol vorgelegt und bei 28 bis 30° C mit trockenem HCl-Gas gesättigt. Zu dieser Lösung werden innerhalb von 3 Stunden eine Lösung von 1,5 Mol (210 g) Dihydroisophoron (3,3,5-Trimethyl-cyclohexan-1-on) und 1,5 Mol (151 g) Phenol zugetropft, wobei weiterhin HCl-Gas durch die Reaktionslösung zugeleitet wird. Nach beendeter Zugabe leitet man für weitere 5 Stunden HCl-Gas ein. Man läßt 8 Stunden bei Zimmertemperatur nachreagieren. Anschließend wird das überschüssige Phenol durch Wasserdampfdestillation entfernt. Der verbleibende Rückstand wird zweimal mit Petrolether (60 - 90) und einmal mit Methylenchlorid heiß extrahiert und abfiltriert.
Ausbeute: 370 g
Schmelzpunkt: 205 bis 207° C

### Beispiel 2

Herstellung von Polycarbonat aus Bisphenol des Beispiels 1 gemäß DE-A 3 832 396

30,94 g (0,1 Mol) des Diphenols aus Beispiel 1, 33,6 g (0,6 Mol) KOH und 560 g Wasser werden in einer Inertgas-Atmosphäre unter Rühren gelöst. Dann fügt man eine Lösung von 0,188 g (2 Mol-%) Phenol in 560 g Methylenchlorid zu. In die gut gerührte Lösung wurden bei pH 13 bis 14 und 21 bis 25° C 189,8 g (0,2 Mol) Phosgen eingeleitet. Danach wird 0,1 ml Ethylpyridin zugegeben und noch 45 Minuten gerührt. Die bisphenolatfreie wäßrige Phase wird abgetrennt, die organische Phase nach Ansäuern mit Phosphorsäure mit Wasser neutral gewaschen und vom Lösungsmittel befreit. Das Polycarbonat hatte eine relative Lösungsviskosität, gemessen in Methylenchlorid bei T = 25° C und einer Polymerkonzentration von 5 g/l, sowie eine Glastemperatur nach DSC (Differential Scanning Calorimetry bei einer Aufheizrate von 20 K/min.) von 233° C.

Beispiel 3

Herstellung eines Polyetherketons auf Basis des Diphenols aus Beispiel 1 gemäß DE-A 3 833 386.

In einer mit Stickstoff gespülten Rührapparatur, die mit einem Wasserabscheider versehen ist, werden 31,04 g (0,1 Mol) des Bisphenols aus Beispiel 1, 21,82 g 4,4'-Difluorbenzophenon, 200 ml N-Methylpyrrolidon, 100 ml Toluol und 18 g Kaliumcarbonat vorgelegt. Es wird destillativ azeotrop entwässert, bis der Ansatz wasserfrei ist. Durch Abdestillieren von Toluol wird die Sumpftemperatur innerhalb einer Stunde auf 180° C erhöht. Der Ansatz wird 4 Stunden bei 180° C gerührt und anschließend für 1 Stunde auf 190 - 195° C aufgeheizt. Danach wird mit 200 ml N-Methylpyrrolidon verdünnt und heiß abgesaugt. Das Filtrat wird mit Essigsäure neutralisiert und das Polymer durch Fällung in einer Methanol-Wasser-Mischung (1 : 1) daraus isoliert. Zur weiteren Reinigung wird das Polymer in Methylenchlorid gelöst und anschließend in Methanol gefällt. Abschließend wird 14 Stunden bei 120° C im Vakuum getrocknet.
Ausbeute: 37,6 g
relative Viskosität, gemessen in Methylenchlorid bei 25° C und einer Polymerkonzentration von 5 g/Liter: 1,297
Glastemperatur, bestimmt mit Hilfe der DSC-Methode bei einer Aufheizgeschwindigkeit von 20 K/min: 223° C

Beispiel 4

Herstellung eines Polyethersulfons auf Basis des Diphenols aus Beispiel 1 gemäß DE-A 3 833 385.

In einer mit Stickstoff gespülten Rührapparatur, die mit einem Wasserabscheider ausgerüstet ist, werden 31,04 g (0,1 Mol) des Bisphenols aus Beispiel 1, 28,72 g 4,4'-Dichlordiphenylsulfon, 200 ml N-Methyl-pyrrolidon, 100 ml Toluol und 18 g Kaliumcarbonat vorgelegt. Es wird destillativ azeotrop entwässert, bis der Ansatz wasserfrei ist. Durch Abdestillieren von Toluol wird die Sumpftemperatur innerhalb einer Stunde auf 180° C erhöht.

Der Ansatz wird 4 Stunden bei 180° C gerührt und anschließend für 1 Stunde auf 190 - 195° C aufgeheizt. Danach wird mit 200 ml N-Methylpyrrolidon verdünnt und heiß abgesaugt. Das Filtrat wird mit Essigsäure neutralisiert und das Polymer durch Fällung in einer Methanol-Wasser-Mischung (1 : 1) daraus isoliert. Zur weiteren Reinigung wird das Polymer in Methylenchlorid gelöst und anschließend in Methanol gefällt. Abschließend wird 14 Stunden bei 120° C im Vakuum getrocknet.
Ausbeute: 35,8 g
relative Viskosität, gemessen wie in Beispiel 3: 1,19
Glastemperatur: 236° C
Das Material zeigte ein recht zähes Verhalten.

Beispiel 5

Als Komponente (a) - Polyarylensulfid - wurde für die nachfolgenden erfindungsgemäßen Beispiele das

nach EP-A 142 042, Beispiel 2, hergestellte Polyarylensulfid verwendet.

1. erfindungsgemäßes Beispiel

1 Gewichtsteil des Polycarbonats aus Beispiel 2 wird mit 99 Gewichtsteilen Polyarylensulfid aus Beispiel 5 in einem Kneter bei etwa 315° C innig vermischt und aus der Mischung bei 275° C unter einem Druck von 200 bar innerhalb 4 Minuten nach fünfminütiger Temperung bei 270° C eine Folie einer Dicke von 368 µm unter einer kreisförmigen Fläche von 5 $cm^2$ gepreßt. Die Permeabilität für $SO_2$ betrug 54,9 Standard-Einheiten.

2. erfindungsgemäßes Beispiel

1 Gewichtsteil des Polyetherketons aus Beispiel 3 wird mit 99 Gewichtsteilen Polyarylensulfid aus Beispiel 5 wie in dem erfindungsgemäßen Beispiel 1 vermischt und eine Folie ähnlicher Größe, jedoch mit einer Dicke von 390 µm, gepreßt. Die Permeabilität für $SO_2$ betrug 9,1 Standard-Einheiten.

3. erfindungsgemäßes Beispiel

1 Gewichtsteil des Polyethersulfons aus Beispiel 4 wird mit 99 Gewichtsteilen Polyarylensulfid aus Beispiel 5 wie oben vermischt und eine Folie ähnlicher Fläche, jedoch mit einer Dicke von von 411 µm, hergestellt. Die Permeabilität für $SO_2$ betrug 14,0 Einheiten.

Vergleichsbeispiel

Aus dem Polyarylensulfid nach Beispiel 5 wird bei 275° C eine Folie einer Dicke von 350 µm und einer kreisähnlichen Fläche von etwa 5 $cm^2$ hergestellt und die Permeabilität für $SO_2$ gemessen. Sie betrug nur 5,8 Standard-Einheiten und ist gegenüber allen erfindungsgemäßen Beispielen deutlich verringert.

## Ansprüche

1. Folien und gegebenenfalls Verbundfolien aus Mischungen, enthaltend
   a) 95 bis 99,8 Gewichts-Teile Polyarylensulfid,
   b) 5 bis 0,2 Gewichts-Teile Polymere und/oder Oligomere, auf Basis der Bisphenole der Formel (I) und/oder Bisphenole der Formel (I) selbst,

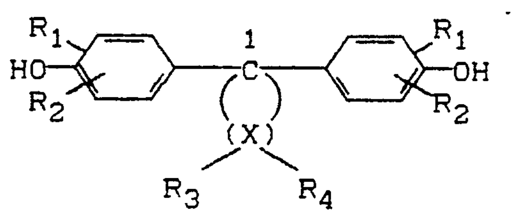

(I),

   in welcher
   $R_1$ und $R_2$ unabhängig voneinander Wasserstoff, Halogen, $C_1$-$C_8$-Alkyl, $C_5$-$C_6$-Cycloalkyl, $C_6$-$C_{10}$-Aryl, $C_7$-$C_{12}$-Alkylaryl und $C_7$-$C_{12}$-Aralkyl bedeuten,
   m für die Zahl 4, 5, 6 oder 7,
   $R_3$ und $R_4$ für jedes X individuell wählbar, unabhängig voneinander Wasserstoff oder $C_1$-$C_6$-Alkyl und
   X Kohlenstoff bedeuten,
   mit der Maßgabe, daß an mindestens einem Atom X, $R_3$ und $R_4$ gleichzeitig Alkyl ist
   sowie gegebenenfalls
   c) 0 bis 80 Gewichts-Teile weitere Additive.
2. Verwendung der Folien nach Anspruch 1 zur Trennung von Gasen.

3. Verwendung von Folien nach Anspruch 1 zur Abtrennung nitroser und/oder schwefelhaltiger Gase.
4. Verwendung von Folien nach Anspruch 1 zur Abtrennung von Schwefeldioxid und/oder Schwefeltrioxid.

Europäisches Patentamt

# EUROPÄISCHER RECHERCHENBERICHT

Nummer der Anmeldung

EP 90 11 5017

| EINSCHLÄGIGE DOKUMENTE | | | |
|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
| P,D A | EP-A-0 359 953 (BAYER AG)(28-03-1990) * Zusammenfassung; Patentansprüche 1-5,7,10-20; Seite 13, Zeile 19 - Seite 14, Zeile 28; Seite 15, Zeilen 40-54; Seite 19, Zeilen 47-57 * & DE-A-3 832 396 | 1,2 | C 08 J 5/18<br>B 01 D 71/66<br>B 01 D 69/12<br>C 08 L 81/02<br>C 08 K 5/04<br>B 01 D 53/22 |
| D,A | PATENT ABSTRACTS OF JAPAN, Band 10, Nr. 139 (C-348)[2196], 22. März 1986; & JP-A-61 432 (DAINIPPON INK) * Abstract * | 1,2 | |
| D,A | US-A-4 596 860 (E.S. PERCEC) * Zusammenfassung; Patentanspruch 1; Spalte 7, Zeilen 37-46 * & US-A-4 673 717 | 1-3 | |
| A | DATABASE WPIL, AN=85-285403, Derwent Publications Ltd, London, GB; & JP-A-60 193 581 (DAINIPPON INK) * Zusammenfassung * | 1,2 | **RECHERCHIERTE SACHGEBIETE (Int. Cl.5)** |
| A | EP-A-0 170 065 (UNION CARBIDE CORP.) * Zusammenfassung; Patentansprüche 1,2,19,22; Seite 5, Zeile 25 - Seite 8, Form. (XI) * | 1 | B 01 D<br>C 08 J<br>C 08 L<br>C 08 K |
| A | EP-A-0 301 597 (UNION CARBIDE CORP.) * Zusammenfassung; Patentanspruch 40; Seite 3, Zeilen 50-54; Seite 5, Zeilen 9-12 * | 1,2 | |
| A | EP-A-0 087 038 (BAYER AG) * Zusammenfassung; Patentansprüche 1,6,8; Seite 10, Zeilen 10-21; Seite 19, Zeilen 4-7 * | 1 | |

-/-

Der vorliegende Recherchenbericht wurde für alle Patentansprüche erstellt

| Recherchenort | Abschlußdatum der Recherche | Prüfer |
|---|---|---|
| DEN HAAG | 17-12-1990 | HOORNAERT P.G.R.J. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P0403)

Europäisches Patentamt

# EUROPÄISCHER RECHERCHENBERICHT

Nummer der Anmeldung

EP 90 11 5017

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| P,A | EP-A-0 350 705 (BAYER AG)(17-01-1990)<br>* Zusammenfassung; Patentansprüche 1,4-6; Seite 4, Zeile 49 - Seite 5, Zeile 4; Seite 7, Zeilen 26-28 *<br>--- | 1,2 | |
| P,A | DE-A-3 841 022 (BAYER AG)(07-06-1990)<br>* Zusammenfassung; Patentansprüche 1-3; Seite 3, Zeilen 31-37 *<br>----- | 1 | |
| | | | RECHERCHIERTE SACHGEBIETE (Int. Cl.5) |

Der vorliegende Recherchenbericht wurde für alle Patentansprüche erstellt

| Recherchenort | Abschlußdatum der Recherche | Prüfer |
|---|---|---|
| DEN HAAG | 17-12-1990 | HOORNAERT P.G.R.J. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P0403)